# FASCICULE DE BREVET EUROPEEN

(11) **EP 1 781 936 B1**
(45) Date de publication et mention de la délivrance du brevet: **03.10.2012**
(21) Numéro de dépôt: 05797547.6
(22) Date de dépôt: 10.08.2005
(51) Int. Cl.: F02N 11/08

(54) **PROCEDE D'INHIBITION DE LA COMMANDE D'ARRET AUTOMATIQUE DU MOTEUR THERMIQUE D'UN VEHICULE EN CAS D'EMBOUTEILLAGE**
VERFAHREN ZUR HEMMUNG DES AUTOMATISCHEN STOPPSTEUERSYSTEMS EINER WÄRMEKRAFTMASCHINE IN EINEM FAHRZEUG IM VERKEHRSSTAU
METHOD OF INHIBITING THE AUTOMATIC STOP CONTROL SYSTEM OF THE HEAT ENGINE OF A VEHICLE IN CONGESTED TRAFFIC

(30) Priorité: 27.08.2004 FR 0451921
(43) Date de publication de la demande: 09.05.2007
(73) Titulaire: Peugeot Citroën Automobiles SA, 78140 Vélizy-Villacoublay (FR)
(72) Inventeur: LEVASSEUR, Guillaume, F-92000 NANTERRE (FR); GUY, Jean-Emmanuel, F-78150 LE CHESNAY (FR); CELISSE, Arnaud, F-75017 PARIS (FR); KLEIN, Hervé, F-92300 LEVALLOIS PERRET (FR)
(74) Mandataire: Ménès, Catherine
(86) Numéro de dépôt international: PCT/FR2005/050669
(87) Numéro de publication internationale: WO 2006/027515

(56) Documents cités:
- EP-A1- 1 396 622
- EP-A2- 1 077 149
- US-A1- 2003 087 724

## Description

La présente invention concerne un procédé de commande de l'arrêt et du démarrage automatique d'un moteur thermique équipant un véhicule automobile ou routier.

La présente invention concerne plus particulièrement la non autorisation de l'arrêt du moteur en situation d'embouteillage.

Les constructeurs de véhicules équipés de moteurs thermiques, tels que les véhicules automobiles ou routiers, cherchent en permanence des solutions techniques susceptibles de réduire la consommation et les émissions de polluants de ces moteurs.

Parmi les différentes solutions développées à ce jour, il a été proposé un système provoquant l'arrêt automatique du moteur dans toutes les phases d'utilisation du véhicule où le fonctionnement du moteur n'est pas nécessaire, telles que les phases où le véhicule est momentanément à l'arrêt et où le moteur continue malgré tout de fonctionner au ralenti, puis opérant le démarrage automatique du moteur lorsque le conducteur souhaite faire repartir son véhicule.

Cette solution d'arrêt et de démarrage automatique des moteurs, encore appelée par les Anglo-saxons "Stop and Start" ou "Stop and Go", a un potentiel important de réduction de la consommation des moteurs car on estime qu'en moyenne, pour un trajet donné, un véhicule est à l'arrêt, moteur tournant au ralenti, pendant environ 20% du temps.

Un système "Stop and Start" comprend généralement un calculateur pour commander automatiquement l'arrêt et le démarrage du moteur thermique à partir d'informations appropriées sur le fonctionnement du véhicule. Ce calculateur comporte notamment des moyens aptes à identifier une phase de demande d'arrêt moteur, des moyens aptes à identifier une phase d'autorisation d'arrêt moteur pendant laquelle l'arrêt du moteur est effectivement possible et des moyens pour opérer l'arrêt effectif du moteur si les conditions "véhicule en phase de demande d'arrêt moteur" et "véhicule en phase d'autorisation d'arrêt moteur" sont réunies.

De la même manière un système "Stop and Start" comporte notamment des moyens aptes à identifier une phase de demande de démarrage moteur, des moyens aptes à identifier une phase d'autorisation de démarrage moteur pendant laquelle le démarrage du moteur est effectivement possible et des moyens pour opérer le démarrage effectif du moteur si les conditions "véhicule en phase de demande de démarrage moteur" et "véhicule en phase d'autorisation de démarrage moteur" sont réunies.

On appelle "phase de demande d'arrêt moteur" toute période temporelle pendant laquelle le conducteur marque sa volonté d'arrêter le moteur de son véhicule, le véhicule pouvant être arrêté ou encore roulant. Une telle volonté d'arrêt du moteur peut être caractérisée par différents critères, comme l'actionnement par le conducteur de la pédale de frein du véhicule.

On appelle "phase d'autorisation d'arrêt moteur" toute période pendant laquelle le fonctionnement du véhicule ne requière pas le fonctionnement du moteur et autorise donc son arrêt. Les conditions de fonctionnement du véhicule requérant le fonctionnement du moteur et ce, alors que le véhicule se trouve en phase de demande d'arrêt moteur, peuvent aussi bien concerner le fonctionnement même d'un équipement du véhicule que relever du seul agrément de conduite. Ces conditions s'opposant à l'arrêt du moteur sont caractérisées par des critères variés telle que par exemple la température de l'eau de refroidissement moteur inférieure à une valeur de seuil prédéterminée. En effet, un moteur doit atteindre une certaine température pour fonctionner de façon optimale, il n'est donc pas opportun de retarder la montée en température du moteur en l'arrêtant trop tôt après son démarrage.

On appelle "phase de demande de démarrage moteur" toute période temporelle pendant laquelle le fonctionnement du véhicule requière le démarrage du moteur. Les conditions de fonctionnement du véhicule requérant un tel démarrage se déduisent généralement des conditions s'opposant à l'arrêt du moteur.

On appelle "phase d'autorisation de démarrage moteur" toute période pendant laquelle le fonctionnement du véhicule n'interdit pas le démarrage du moteur. Les conditions de fonctionnement s'opposant à un démarrage peuvent être liées par exemple à l'état ouvert ou fermé de l'embrayage et/ou à l'état de la transmission, vitesse engagée ou non.

Le document WO-98/14702 décrit un système "Stop and Start". Ce système comprend une carte électronique qui commande l'arrêt ou le démarrage du moteur thermique à partir des informations fournies par deux capteurs :
- un capteur de position de la pédale d'embrayage ;
- un capteur de position du frein à main.

Si la pédale d'embrayage n'est pas enfoncée et si le frein à main est actionné, alors le moteur est arrêté automatiquement. Si la pédale d'embrayage est enfoncée et si le frein à main est relâché, alors le moteur est remis en route automatiquement.

Ce système utilise aussi un capteur de régime du moteur qui désactive la carte électronique si le régime du moteur est au-dessus d'un certain seuil et un capteur de température du moteur qui désactive également la carte électronique si le moteur n'a pas atteint sa température de fonctionnement.

Un tel système permet bien de réduire la consommation du moteur thermique en minimisant les phases de fonctionnement au ralenti du moteur. Toutefois, la réduction de consommation générée par un tel système ne semble pas particulièrement optimisée.

En effet, les phases de demande d'arrêt du moteur sont ici simplement limitées aux périodes d'actionnement du frein de parking. Quant aux phases d'autorisation de l'arrêt moteur, elles ne sont définies qu'à partir d'un nombre très limité de conditions de fonctionnement du véhicule s'opposant à l'arrêt du moteur, à savoir les fonctionnements "moteur froid" ou encore les fonctionnements à vitesse de rotation élevée.

Avec un tel système, tout arrêt du véhicule pour lequel il n'est pas procédé à l'actionnement du frein de parking n'entraîne donc aucun arrêt du moteur, or ce type d'arrêt représente une proportion importante des phases d'arrêt véhicule. En effet, les conducteurs tirent rarement le frein à main en situation d'arrêt temporaire, comme lors d'arrêts à des feux tricolores de signalisation.

Par ailleurs, la solution décrite dans le document WO98/14702 est purement matérielle. Par conséquent, sa complexité et notamment celle de la carte électronique croît rapidement lorsque augmente le nombre d'informations prises en compte pour opérer l'arrêt automatique du moteur.

La demande de brevet FR-A-2 816 891 déposée par la Demanderesse décrit un système "Stop and Start" plus perfectionné remédiant aux inconvénients des systèmes antérieurs en créant un système permettant de mettre en oeuvre des stratégies d'arrêt et de démarrage automatique du moteur sensiblement plus performantes.

Le système de commande de l'arrêt et du démarrage automatique d'un moteur thermique de véhicule objet de la demande FR-A-816891 comprend des moyens d'arrêt et de démarrage du moteur, des capteurs d'informations sur l'état du véhicule, des moyens de commande desdits moyens d'arrêt et de démarrage du moteur à partir des informations des capteurs et est caractérisé en ce que ces moyens de commande comportent un calculateur contenant un algorithme de commande dudit moteur agissant en fonction des données délivrées par lesdits capteurs d'informations.

Ce système permet donc de prendre en compte un plus grand nombre de situations de fonctionnement véhicule demandant l'arrêt du moteur et donc d'améliorer le gain en consommation généré par un plus grand nombre d'arrêts du moteur, tout en prenant en compte un plus grand nombre de conditions de fonctionnement du véhicule s'opposant à l'arrêt du moteur et ce, de façon notamment à limiter les éventuels impacts d'un arrêt du moteur sur le fonctionnement du véhicule et sur son agrément de conduite.

Un tel système permet ainsi de résoudre simplement des problèmes qui font appel à des stratégies de contrôle du moteur plus complexes prenant en compte un nombre important de conditions de fonctionnement du véhicule.

Il est toutefois apparu que de nouveaux progrès étaient nécessaires pour offrir un meilleur agrément de conduite.

En effet, dans tous les systèmes proposés à ce jour, les situations relatives aux encombrements du trafic routier lorsque notamment les véhicules roulent au pas et sont soumis à de fréquents arrêts, situations encore appelées embouteillages ou bouchons, ne sont pas considérées, ce qui a pour effet dans de telles conditions de circulation, d'engendrer une successions d'arrêts moteurs courts et inutiles sinon pénalisants en terme de consommation de carburant.

Les documents US2003/087724 A1 (SEIBERTZ ACHIM ET AL) et EP 1 077 149 A2 (HONDA GIKEN KOGYO KABUSHIKI) divulguent bien la prise en compte de situations d'embouteillage pour adapter l'arrêt du moteur engendré par un système « Stop and Start ». Ses situations d'embouteillage sont toutefois identifiées par le nombre de freinages ou le nombre de changements de rapports de boîte de vitesses et la vitesse du véhicule.

La présente invention vise donc à améliorer encore le procédé de commande de l'arrêt et du démarrage automatique d'un moteur en proposant un procédé de commande automatique de l'arrêt et du démarrage d'un moteur apte à discriminer les situations d'embouteillage et qui en tient compte pour définir les autorisations d'arrêt moteur.

Le procédé selon l'invention concerne la commande de l'arrêt et du démarrage d'un moteur thermique équipant un véhicule du type selon laquelle il est nécessaire que le véhicule se trouve en phase de demande d'arrêt moteur et ne se trouve pas dans les conditions de fonctionnement prédéfinies s'opposant à l'arrêt du moteur pour que l'arrêt du moteur soit commandé ou qu'il est nécessaire que le véhicule se trouve en phase de demande de démarrage moteur et ne se trouve pas dans les conditions de fonctionnement prédéfinies s'opposant au démarrage du moteur pour que le démarrage du moteur soit commandé

Selon l'invention, le procédé de commande de l'arrêt et du démarrage d'un moteur thermique est caractérisé en ce que les conditions de fonctionnement du véhicule s'opposant à l'arrêt du moteur comprennent les conditions de circulation ralentie de type embouteillage, ces conditions de circulation ralentie étant identifiées à partir de la fréquence de commande de l'arrêt moteur, la durée de fonctionnement du moteur, la distance parcourue ou encore la vitesse atteinte par le véhicule entre deux phase d'arrêt.

Selon une autre caractéristique du procédé de commande objet de la présente invention, les conditions de circulation ralentie sont identifiées à partir de l'analyse des laps de temps séparant les commande d'arrêt moteur les unes des autres.

Selon une autre caractéristique du procédé de commande objet de la présente invention, l'arrêt du moteur ne peut être commandé que s'il s'est écoulé un laps de temps supérieur à une valeur de seuil prédéterminée depuis la précédente commande de l'arrêt du moteur.

Selon une autre caractéristique du procédé de commande objet de la présente invention, les conditions de circulation ralentie sont identifiées à partir de l'analyse de la durée de fonctionnement du moteur.

Selon une autre caractéristique du procédé de commande objet de la présente invention, l'arrêt du moteur ne peut être commandé tant que la durée de fonctionnement du moteur ne dépasse pas une valeur de seuil prédéterminée.

Selon une autre caractéristique du procédé de commande objet de la présente invention, les conditions de circulation ralentie sont identifiées à partir de l'analyse des distances parcourues par le véhicule.

Selon une autre caractéristique du procédé de commande objet de la présente invention, l'arrêt du moteur ne peut être commandé tant que la distance parcourue depuis le dernier démarrage est supérieure à une première valeur de seuil et inférieure à une seconde valeur de seuil.

Selon une autre caractéristique du procédé de commande objet de la présente invention, les conditions de circulation ralentie sont identifiées à partir de l'analyse des vitesses atteintes par le véhicule.

Selon une autre caractéristique du procédé de commande objet de la présente invention, les conditions de fonctionnement du véhicule s'opposant à l'arrêt du moteur comprennent la vitesse de déplacement du véhicule supérieure à une valeur de seuil, cette valeur de seuil étant adaptée pour tenir compte des conditions de circulation et notamment d'une situation d'embouteillage.

Selon une autre caractéristique du procédé de commande objet de la présente invention, tant que la vitesse du véhicule depuis son dernier démarrage n'a pas dépassé une première valeur de seuil prédéterminée alors l'arrêt du moteur ne peut être commandé que si la vitesse du véhicule est inférieure à une seconde valeur de seuil prédéterminée.

L'invention sera mieux comprise à la lecture de la description qui va suivre, donnée uniquement à titre d'exemple et faite en se référant aux dessins annexés sur lesquels :
- la figure 1 représente une architecture matérielle de l'ensemble du système de mise en oeuvre du procédé selon l'invention ;
- les figures 2 à 4 représentent les différentes étapes d'un organigramme schématique du procédé selon l'invention.

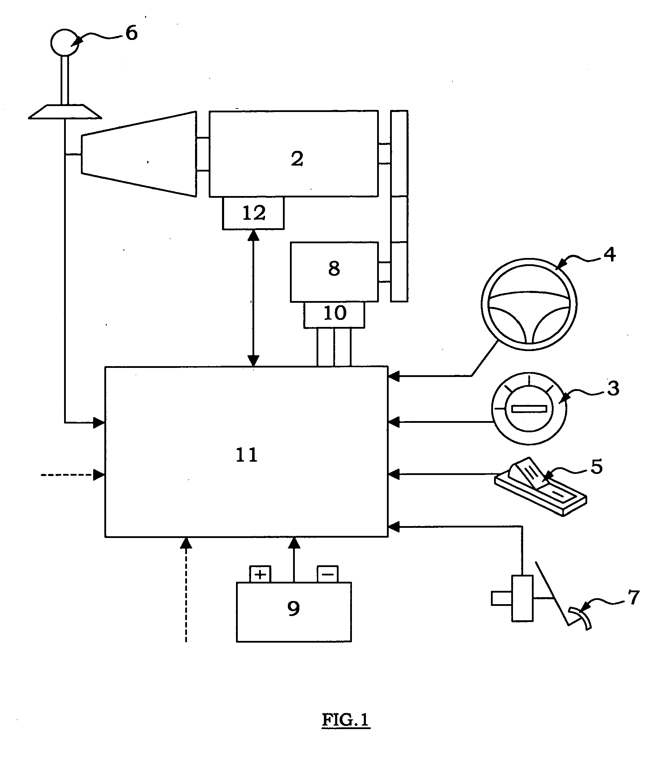

La figure 1 représente différents organes d'un véhicule automobile équipé d'un moteur thermique 2. Dans l'habitacle du véhicule, un commutateur 3 (avec ou sans clé) disposé à proximité du volant de direction 4 commande manuellement le démarrage ou l'arrêt du moteur 2 tandis qu'un moyen, tel qu'un commutateur à deux positions de type bouton poussoir 5, permet au conducteur d'activer ou d'inhiber le fonctionnement du véhicule en mode "Stop and Start", c'est-à-dire en mode d'arrêt et de démarrage automatique du moteur 2.

Le véhicule comporte par ailleurs un mécanisme de transmission dont le levier de changement de vitesses 6 est figuré ainsi qu'un dispositif de freinage commandé notamment par une pédale de frein 7.

Bien évidemment ces équipements ne sont pas limitatifs des autres équipements du véhicule qui n'ont pas été figurés tels que notamment un embrayage, un groupe moto-ventilateur pour refroidir le moteur 2, un dispositif de climatisation pour refroidir/chauffer l'habitacle ou encore un mécanisme de direction assistée, etc.

Le moteur thermique 2 est un moteur classique du type multi-cylindres à allumage commandé ou à allumage par compression (diesel). Ces types de moteur sont bien connus et ne seront donc pas détaillés plus avant. Le fonctionnement du moteur 2 est classiquement commandé par un calculateur de contrôle moteur 12 qui pilote notamment le débit de carburant.

Le moteur 2 coopère avec des moyens de démarrage appropriés telle qu'une machine électrique tournante réversible 8 formant alternato-démarreur. Une transmission de mouvement, par exemple par poulies et courroie, relie le rotor de l'alterno-démarreur 8 au vilebrequin du moteur 2.

Dans une variante de réalisation, le moteur 2 peut également coopérer avec un démarreur additionnel non figuré distinct de l'alterno-démarreur 8.

La machine 8 permet de transformer un mouvement de rotation du rotor inducteur, entraîné par le moteur thermique 2 du véhicule, en un courant électrique induit dans les bobinages du stator. Ce courant est alors destiné à alimenter en électricité le réseau de bord du véhicule et à charger la batterie 9 de ce véhicule.

La machine 8 peut également constituer un moteur électrique ou machine électrique tournante et entraîner en rotation, via l'arbre de rotor, le moteur thermique 2 du véhicule. Ainsi, l'alterno-démarreur 8 peut démarrer le moteur thermique 2 du véhicule automobile.

Cette machine 8 par exemple de type polyphasé fonctionne donc en alternateur pour, notamment, charger la batterie du véhicule et en démarreur pour entraîner le moteur à combustion interne, dit aussi moteur thermique, du véhicule automobile pour son démarrage. A cet effet, une unité de puissance connectée sur les phases de l'induit de l'alternateur sert de pont de commande de ces phases en mode moteur et fait office de pont redresseur lorsque l'alterno-démarreur 8 fonctionne en mode alternateur.

Une telle machine 8 est bien connue en elle-même et ne sera pas détaillée plus avant. Le document FR2842041 décrit par exemple une telle machine.

Le système mettant en oeuvre le procédé de commande automatique de l'arrêt et du démarrage du moteur selon l'invention comprend un calculateur 11 qui pilote via les calculateurs 10 et 12 le fonctionnement de la machine 8 et l'arrêt et le démarrage du moteur 2 et ce, à partir d'un certain nombre d'informations concernant le fonctionnement du véhicule.

Le calculateur 11 coopère en effet avec des capteurs d'information appropriés aptes à fournir en plus de la position du commutateur 3 ou du bouton 5, les informations requises sur le fonctionnement du véhicule telle que la vitesse de rotation du moteur 2, la vitesse du véhicule, la distance parcourue, la position de la pédale d'embrayage, la position de la pédale d'accélérateur, la position du levier de changement de vitesses 6, la position de la pédale de frein 7 et celle du levier de frein à main, le rapport de vitesse enclenchée dans la boîte de vitesses, la température d'eau de refroidissement du moteur, l'état de charge de la batterie 9, l'état de la climatisation, le couple exercé par le conducteur sur le volant, etc.

Il est important de remarquer que le calculateur 11 au sens de la présente invention est défini de façon plus générale comme étant tout système dans lequel peut être implanté un algorithme de commande à l'aide de moyens de programmation et contenant au moins une mémoire. Un réseau logique programmable du type ASIC pourrait être utilisé. Ce calculateur 11 peut être spécifique comme illustré ou bien encore être intégré à un autre calculateur comme, par exemple, les calculateurs 10 ou 12 ou bien encore intégré dans plusieurs calculateurs.

Le calculateur 11 opère une surveillance constante du fonctionnement du véhicule à partir d'un certain nombre d'informations transmises directement par des capteurs appropriés ou par l'intermédiaire d'autres calculateurs auxquels le calculateur 11 est connecté et, le moteur étant tournant, il en vérifie si le véhicule se trouve ou non en phase de demande d'arrêt moteur et en phase d'autorisation d'arrêt moteur et en déduit l'arrêt du moteur. De la même façon, le moteur étant arrêté, le calculateur 11 vérifie à partir des informations reçues si le véhicule se trouve ou non en phase de demande de démarrage et en phase d'autorisation du démarrage moteur et en déduit le démarrage du moteur.

Les phases de demande d'arrêt moteur sont définies par des critères de fonctionnement véhicule appropriés combinant le fait que le bouton 5 se trouve en position "non inhibé" et que notamment l'un des critères suivants soit observé :
- la position de la pédale de frein passe de "non appuyée" à "appuyée";
- le levier de vitesses est au neutre.

Pour ce qui est des phases d'autorisation d'arrêt moteur, elles sont définies à partir d'un certain nombre de critères identifiant des conditions de fonctionnement véhicule prédéfinies s'opposant à l'arrêt du moteur 2.

On pourra distinguer différents types de condition de fonctionnement véhicule susceptibles de définir ces phases d'autorisation :
- des conditions liées au véhicule proprement dit tels que les besoins moteur (température d'eau, etc.), les besoins d'assistance freinage, les besoins du réseau électrique de bord, les besoins thermiques habitacles, etc.;
- des conditions liées à l'agrément de conduite tels que des manoeuvres de parking, etc.;
- des conditions liées au conducteur.

Pour ce qui est des phases de demande de démarrage, elles se déduisent sensiblement des conditions s'opposant à l'arrêt du moteur. Quant aux conditions s'opposant aux demandes de démarrage, elles comprennent notamment des situations liées à la transmission telle que l'existence d'une vitesse enclenchée.

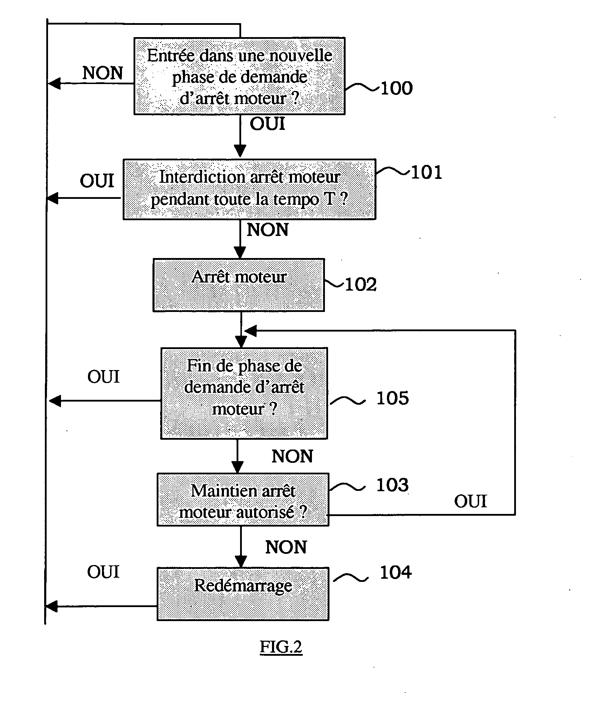

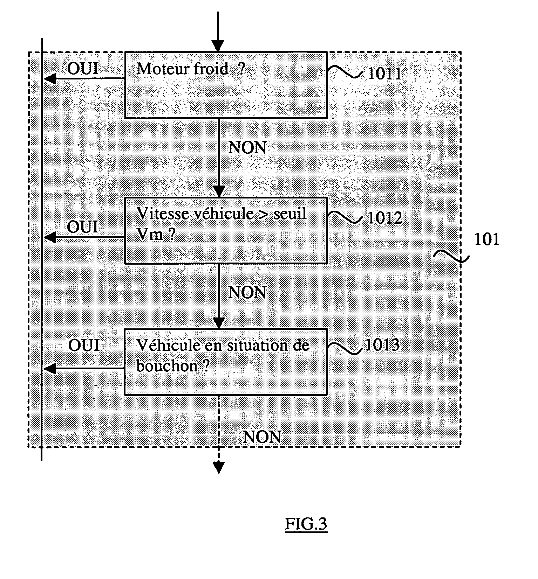

Les figures 2 à 4 représentent un exemple d'algorithme de commande mettant en oeuvre le procédé selon l'invention et contenu dans les mémoires électroniques du calculateur 11.

Il est à noter que l'architecture logicielle utilisée pour coder l'algorithme peut se décomposer en deux modules.

Un premier module appelé logiciel de bas niveau regroupe les commandes relatives à l'architecture matérielle utilisée telles que la lecture d'un signal sur l'une des entrées du microcontrôleur ou l'émission d'un signal de sortie. Ce logiciel de bas niveau est propre au microcontrôleur utilisé. Le second module appelé logiciel de haut niveau, est lui spécifique à l'application réalisée.

Dans la présente invention, le second module est utilisé pour implanter la stratégie de gestion des démarrages et des arrêts automatiques du moteur. Il est réalisé dans un langage de programmation tel que le langage C.

Une fois le moteur démarré et dans le cas où le commutateur 4 est dans la position dans laquelle la fonction d'arrêt automatique du moteur est activée, le calculateur 11 scrute régulièrement l'état de fonctionnement du moteur à partir des informations collectées et déroule donc de façon itérative les étapes ci-dessous.

En se reportant à la figure 2, lors de l'étape de test 100, le calculateur 11 vérifie si véhicule est entré dans une nouvelle phase de demande d'arrêt moteur.

Une phase de demande d'arrêt est par exemple identifiée si le conducteur appuie sur la pédale de frein et/ou s'est mis au point mort (levier de vitesses en position neutre ou point mort) et que le bouton 5 est en position d'activation ou "non inhibé".

Lorsqu'une nouvelle phase de demande d'arrêt du moteur a été identifiée et pendant tout le temps que va durer cette phase de demande d'arrêt c'est-à-dire tout le temps que le conducteur garde son pied appuyé sur la pédale de frein et/ou demeure au point mort et que le bouton 5 est en position d'activation, le calculateur vérifie ensuite si le véhicule se trouve en phase d'autorisation d'arrêt moteur ou non et ce lors de l'étape 101.

L'arrêt effectif du moteur n'est, en effet, commandé que si les conditions de fonctionnement du véhicule le permettent c'est-à-dire si le véhicule ne se trouve pas dans l'une quelconque des conditions prédéterminées pour lesquelles l'arrêt du moteur n'est pas autorisé.

Si au moins une des conditions de fonctionnement du moteur s'opposant à l'arrêt du moteur se trouve vérifiée alors le moteur n'est pas arrêté et le moteur ne sera pas arrêté pendant toute la durée de la phase présente de demande d'arrêt véhicule même si la condition n'autorisant pas initialement l'arrêt vient à disparaître avant la fin de cette phase de demande d'arrêt. Le processus s'arrête donc là et l'on revient à l'étape 100.

Dans la variante de réalisation représentée à la figure 2, on pourra également autoriser un arrêt si la condition n'autorisant pas initialement l'arrêt du moteur vient à disparaître avant un laps de temps ou temporisation T comptée à partir de l'entrée en phase d'arrêt du véhicule. Cette temporisation T calibrée en fonction du moteur et du véhicule concernés est généralement comprise entre deux et dix secondes.

Les conditions s'opposant à l'arrêt du moteur sont donc, une à une, testées au cours de l'étape 101 et si aucune de ces conditions n'est rencontrée alors le moteur est arrêté à l'étape 102.

En se reportant à la figure 2 on voit que l'étape 101 consiste donc en une série de tests 1011, 1012, 1013, 101i...., caractérisant chacun des conditions de fonctionnement du véhicule pour lesquelles l'arrêt du moteur n'est pas autorisé. Ces conditions ne seront pas détaillés plus avant à l'exception de celles objet de la sous-étape 1011 donnée à titre d'exemple et de celles objet des sous-étapes 1012 et 1013 relatives à la présente invention.

Ainsi, la sous-étape 1011 concerne les conditions de fonctionnement "moteur froid" du véhicule caractérisé notamment par une température d'eau de refroidissement inférieure à une valeur de seuil calibrée. Il est en effet important notamment pour la dépollution des gaz d'échappement du moteur de favoriser le plus possible la montée en température du moteur et donc de ne pas l'arrêter tant qu'il n'a pas atteint une température suffisante.

Ainsi, la sous-étape 1012 concerne la vitesse de déplacement du véhicule. La commande de l'arrêt du moteur n'est pas autorisée tant que la vitesse de déplacement du véhicule demeure supérieure à une valeur de seuil donnée Vm. Cette valeur de seuil calibrée Vm est généralement comprise entre quatre et dix kilomètres par heure.

Ainsi, la sous-étape 1013 concerne le conditions de circulation ralentie de type notamment "embouteillage". En effet, lors de telles conditions de circulation, il survient de nombreuses conditions d'immobilisation de courte durée du véhicule pendant lesquelles il n'est pas très pertinent d'arrêter le moteur.

Conformément à l'invention, le procédé de commande du moteur opère la reconnaissance spécifiques de telles conditions de circulation ralentie à partir d'informations appropriées caractéristiques que sont la fréquence de commande de l'arrêt moteur, la durée de fonctionnement du moteur, la distance parcourue ou encore la vitesse atteinte par le véhicule entre deux phase d'arrêt.

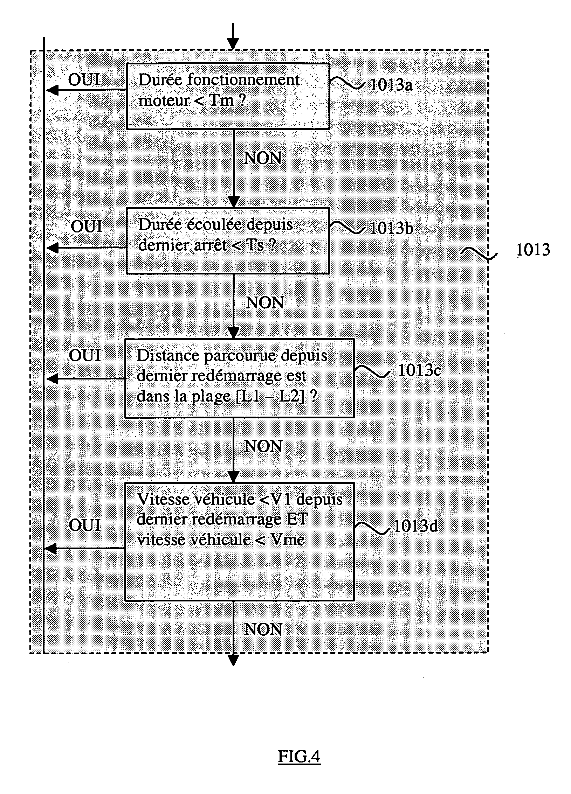

Il en résulte que l'étape 1013 se décompose en une succession de quatre sous-étapes détaillées à la figure 4 en correspondance avec les quatre critères retenus.

A l'étape 1013a, on contrôle la durée de fonctionnement du moteur. Si la durée de fonctionnement du moteur depuis la dernière commande de démarrage du moteur est supérieure à une valeur de seuil Tm calibrée tant que la durée de fonctionnement du moteur n'a pas dépassé depuis son dernier démarrage le seuil Tm alors l'arrêt du moteur n'est pas autorisé. Cette valeur de temps calibrée Tm est généralement comprise entre une seconde et trois minutes.

A l'étape 1013b, on contrôle le temps écoulé entre les commandes d'arrêt moteur. Si la durée écoulée depuis la dernière demande d'arrêt est supérieure à une valeur de seuil Ts calibrée tant que la durée écoulée depuis la dernière demande d'arrêt moteur n'a pas dépassé le seuil Ts alors l'arrêt du moteur n'est pas autorisé. Cette valeur de temps calibrée Ts est généralement comprise entre une et trente secondes.

A l'étape 1013c, on contrôle la distance parcourue par le véhicule depuis le dernier démarrage. Si la distance parcourue par le véhicule depuis le dernier démarrage est supérieure à une première valeur de seuil L1 mais inférieure à une seconde valeur de seuil L2 supérieure ou égale à L1 alors l'arrêt du moteur n'est pas autorisé. Ces valeur de seuil L1 et L2 sont calibrées et généralement comprises entre zéro et deux cent mètres.

A l'étape 1013d, on contrôle la vitesse du véhicule. Si la vitesse du véhicule demeure inférieure à une valeur de seuil V1 calibrée depuis le dernier démarrage alors l'arrêt du moteur n'est pas autorisé tant que la vitesse de déplacement du véhicule demeure supérieure à une valeur de seuil donnée Vme. Cette valeur de seuil calibrée Vme, inférieure à Vm, est généralement comprise entre un et quatre kilomètres par heure, quant à la valeur calibrée V1 elle est généralement comprise entre cinq et trente kilomètres par heure.

Ainsi grâce à la mise en oeuvre du procédé selon l'invention, il est possible d'identifier de façon très précise le véhicule en condition de circulation ralentie et d'opérer alors l'inhibition de la fonction d'arrêt et de démarrage automatique du moteur et ce, pour offrir permettre un plus grand confort d'utilisation du véhicule au conducteur et optimiser l'impact du système sur la consommation de carburant.

Bien évidemment la présente invention n'est pas limitée au mode particulier de réalisation décrit ci-dessus et on peut apporter à celui-ci de nombreux changements ou modifications sans sortir de la présente invention.

Ainsi, les étapes 1012 et 1013d peuvent être regroupées en rendant la valeur Vm dépendante de la vitesse atteinte par le véhicule depuis son dernier démarrage.

## Revendications

1. Procédé de commande de l'arrêt et du démarrage d'un moteur thermique (2) équipant un véhicule du type selon lequel il est nécessaire que le véhicule se trouve en phase de demande d'arrêt moteur et ne se trouve pas dans les conditions de fonctionnement prédéfinies s'opposant à l'arrêt dudit moteur (2) pour que l'arrêt du moteur (2) soit commandé ou qu'il est nécessaire que le véhicule se trouve en phase de demande de démarrage moteur et ne se trouve pas dans les conditions de fonctionnement prédéfinies s'opposant au démarrage dudit moteur (2) pour que le démarrage du moteur soit commandé, lesdites conditions de fonctionnement du véhicule s'opposant à l'arrêt dudit moteur (2) comprenant les conditions de circulation ralentie de type embouteillage, **caractérisé en ce que** ces conditions de circulation ralentie sont identifiées à partir de la fréquence de commande de l'arrêt moteur et à partir des informations suivantes :
- durée de fonctionnement du moteur depuis la dernière commande de démarrage du moteur;
- temps écoulé entre les commandes d'arrêt moteur ;
- distance parcourue par le véhicule depuis le dernier démarrage ; et,
- vitesse du véhicule.

2. Procédé de commande selon la revendication 1, **caractérisé en ce que** l'arrêt du moteur ne peut être commandé que s'il s'est écoulé un laps de temps supérieur à une valeur de seuil prédéterminée (Ts) depuis la précédente commande de l'arrêt du moteur.

3. Procédé de commande selon la revendication 1, **caractérisé en ce que** l'arrêt du moteur ne peut être commandé tant que la durée de fonctionnement du moteur (2) ne dépasse pas une valeur de seuil prédéterminée (Tm).

4. Procédé de commande selon la revendication 1, **caractérisé en ce que** l'arrêt du moteur ne peut être commandé tant que la distance parcourue depuis le dernier démarrage est supérieure à une première valeur de seuil (L1) et inférieure à une seconde valeur de seuil (L2).

5. Procédé de commande selon la revendication 1, **caractérisé en ce que** lesdites conditions de fonctionnement du véhicule s'opposant à l'arrêt dudit moteur (2) comprennent la vitesse de déplacement du véhicule supérieure à une valeur de seuil (Vm), ladite valeur de seuil (Vm) étant adaptée (Vme) pour tenir compte des conditions de circulation et notamment d'une situation d'embouteillage.

6. Procédé de commande selon la revendication 5, **caractérisé en ce que** tant que la vitesse du véhicule depuis son dernier démarrage n'a pas dépassé une première valeur de seuil prédéterminée (V1) alors l'arrêt du moteur ne peut être commandé que si la vitesse du véhicule est inférieure à une seconde valeur de seuil prédéterminée (Vme).

## Claims

1. A method of controlling the stopping and starting of a heat engine (2) equipping a vehicle of the type according to which it is necessary that the vehicle is in the engine stop request phase and not in the predefined operating conditions opposed to the stopping of the said engine (2) so that the stopping of the engine (2) is controlled or it is necessary that the vehicle is in engine start request phase and is not in the predefined operating conditions opposed to the starting of the said engine (2) so that the starting of the engine is controlled, with the said operating conditions of the vehicle opposed to the stopping of the said engine (2) including the conditions of slow traffic of the traffic jam type, **characterized in that** these slow traffic conditions are identified from the frequency of the engine stop control and from the following information:
- duration of operation of the engine from the last start command of the engine;
- time elapsed between the stop commands of the engine;
- distance covered by the vehicle form the last start; and
- speed of the vehicle.

2. The control method according to Claim 1, **characterized in that** the stopping of the engine can only be controlled when a lapse of time has passed which is greater than a predetermined threshold value (Ts) from the previous control of the stopping of the engine.

3. The control method according to Claim 1, **characterized in that** the stopping of the engine can not be controlled as long as the operating duration of the engine (2) does not exceed a predetermined threshold value (Tm).

4. The control method according to Claim 1, **characterized in that** the stopping of the engine can not be controlled as long as the distance covered since the last starting is greater than a first threshold value (L1) and less than a second threshold value (L2).

5. The control method according to Claim 1, **characterized in that** the said operating conditions of the vehicle opposed to the stopping of the said engine (2) include the moving speed of the vehicle greater than a threshold value (Vm), the said threshold value (Vm) being adapted (Vme) to take into account the traffic conditions and in particular a traffic jam situation.

6. The control method according to Claim 5, **characterized in that** as long as the speed of the vehicle since its last starting has not exceeded a first predetermined threshold value (V1), then the stopping of the engine can be controlled only if the speed of the vehicle is less than a second predetermined threshold value (Vme).

## Patentansprüche

1. Verfahren zur Stoppsteuerung und zum Starten einer Wärmekraftmaschine (2), die ein Fahrzeug des Typs ausstattet, bei dem es erforderlich ist, dass sich das Fahrzeug in der Phase der Motorstoppanforderung befindet und nicht in den vordefinierten Betriebsbedingungen, die sich dem Stoppen des Motors (2) widersetzen, damit das Stoppen des Motors (2) gesteuert wird, oder bei dem es erforderlich ist, dass sich das Fahrzeug in der Phase der Motorstartanforderung befindet und nicht in den vorbestimmten Bedingungen, die sich dem Starten des Motors (2) widersetzen, damit das Starten des Motors gesteuert wird, wobei die Betriebsbedingungen des Fahrzeugs, die sich dem Stoppen des Motors (2) widersetzen, die Bedingungen des verlangsamten Verkehrs des Typs Stau aufweisen, **dadurch gekennzeichnet, dass** diese verlangsamten Verkehrsbedingungen ausgehend von der Häufigkeit der Motorstoppsteuerung und ausgehend von den folgenden Informationen identifiziert werden:
- Betriebsdauer des Motors seit der letzten Motorstoppsteuerung;
- zwischen den Motorstoppsteuerungen verstrichene Zeit;
- von dem Fahrzeug seit dem letzten Starten zurückgelegte Entfernung und
- Geschwindigkeit des Fahrzeugs.

2. Steuerverfahren nach Anspruch 1, **dadurch gekennzeichnet, dass** das Stoppen des Motors nur gesteuert werden kann, wenn seit dem vorhergehenden Steuern des Stoppens des Motors eine Zeitspanne verstrichen ist, die größer ist als ein vorbestimmter Schwellenwert (Ts).

3. Steuerverfahren nach Anspruch 1, **dadurch gekennzeichnet, dass** das Stoppen des Motors nur gesteuert werden kann, solange die Betriebsdauer des Motors (2) nicht einen vorbestimmten Schwellenwert (Tm) überschreitet.

4. Steuerverfahren nach Anspruch 1, **dadurch gekennzeichnet, dass** das Stoppen des Motors nur gesteuert werden kann, solange die seit dem letzten Starten zurückgelegte Entfernung größer ist als ein erster Schwellenwert (L1) und kleiner als ein zweiter Schwellenwert (L2).

5. Steuerverfahren nach Anspruch 1, **dadurch gekennzeichnet, dass** die Betriebsbedingungen des Fahrzeugs, die sich dem Stoppen des Motors (2) widersetzen, die Fahrgeschwindigkeit des Fahrzeugs größer als ein Schwellenwert (Vm) umfassen, wobei der Schwellenwert (Vm) angepasst ist (Vme), um Verkehrsbedingungen und insbesondere eine Stausituation zu berücksichtigen.

6. Steuerverfahren nach Anspruch 5, **dadurch gekennzeichnet, dass**, solange die Geschwindigkeit des Fahrzeugs seit seinem letzten Stoppen nicht einen ersten vorbestimmten Schwellenwert (V1) überschritten hat, das Stoppen des Motors nur gesteuert werden kann, wenn die Geschwindigkeit des Fahrzeugs kleiner ist als ein zweiter vorbestimmter Schwellenwert (Vme).
